# EUROPÄISCHE PATENTSCHRIFT

(11) **EP 0 532 555 B1**
(45) Veröffentlichungstag und Bekanntmachung des Hinweises auf die Patenterteilung: **14.12.1994**
(21) Anmeldenummer: 91910044.6
(22) Anmeldetag: 28.05.1991
(51) Int. Cl.: C04B 35/80

(54) **KERAMIKVERBUNDKÖRPER, VERFAHREN ZUR HERSTELLUNG EINES KERAMIKVERBUNDKÖRPERS UND DESSEN VERWENDUNG**
CERAMIC COMPOSITE, PROCESS FOR PRODUCING IT AND ITS USE
CORPS CERAMIQUE COMPOSITE, SON PROCEDE DE PRODUCTION ET SON UTILISATION

(30) Priorität: 01.06.1990 DE 4017651; 06.09.1990 DE 4028217
(43) Veröffentlichungstag der Anmeldung: 24.03.1993
(73) Patentinhaber: Krupp Widia GmbH, 45145 Essen (DE)
(72) Erfinder: DREYER, Klaus, D-4300 Essen 1 (DE); KASSEL, Dieter, D-5810 Witten 3 (DE); KOLASKA, Hans, D-4250 Bottrop (DE)
(74) Vertreter: Vomberg, Friedhelm, Dipl.-Phys.
(86) Internationale Anmeldenummer: EP9100980
(87) Internationale Veröffentlichungsnummer: WO9118847

(56) Entgegenhaltungen:
- EP-B- 208 910
- US-A- 4 916 092
- PATENT ABSTRACTS OF JAPAN, unexamined applications, Sections C, Band 13, Nr. 84, 27. Februar 1989, The Patent Office Japanese Government, siehe Seite 34 c 572, siehe Kokai-Nr. 63-270 350 (A) (SUMITOMO ELECTRIC IND LTD.) siehe Zusammenfassung.
- Zeitschrift für wirtschaftliche Fertigung und Automatisierung, 83. Jahrgang, Nr. 7, Juli 1988, Berlin, J. KOLASKA et al. "SiC-whiskerverstärkte Schneidkeramiken auf der Basis von Aluminiumoxid", Seiten 354-359 (in der beschreibung genannt).

## Beschreibung

Die Erfindung betrifft einen faserverstärkten Keramikverbundkörper, der folgende Bestandteile enthält:
- 5 bis 40 Massen-% SiC-Whisker
- 0,05 bis 3 Massen-% Y₂O₃, SiO₂, MgO, NiO und/oder AlN und/oder
- Carbide, Nitride und/oder Carbonitride der Metalle der IVa-, Va- oder VIa-Gruppe des Periodensystems und/oder Oxide der Metalle der IVa-Gruppe des Periodensystems bis zu 40 Massen-%,
- 0,05 bis 10 Massen-% Nickel und/oder Cobalt und/oder Eisen und
- Rest Al₂O₃ in einer Mindestmenge von 30 Massen-%.

Die Erfindung betrifft ferner ein Verfahren zur Herstellung eines Keramikverbundkörpers der genannten Art, bei dem die Ausgangspulver vermischt, naß vermahlen, getrocknet, ggf. granuliert, uniaxial oder kaltisostatisch gepreßt und der so hergestellte Verbundkorper bei 1450°C bis 1800°C gesintert und anschließend unter einem Druck von 5 bis ca. 2000 bar heißisostatisch nachverdichtet (HIP) wird.

Die Erfindung betrifft ferner die Verwendung des Keramikverbundwerkstoffes.

Wie in der DE-Z "ZWF", Zeitschrift für wirtschaftliche Fertigung und Automatisierung, 83. Jahrgang, Seiten 354 bis 359, (1988), beschrieben, führten die Bestrebungen, den Anwendungsbereich keramischer Schneidstoffe zu erweitern, in jüngster Zeit zur Entwicklung SiC-whisker-verstärkter Keramiken auf Al₂O₃-Basis. Die Einlagerung von SiC-Whiskern wirkt sich vor allem positiv auf seine mechanischen Eigenschaften und auf das Leistungsverhalten beim Einsatz als Schneidwerkstoff aus. Insbesondere haben whiskerhaltige Proben im Vergleich zu whiskerfreien eine wesentlich höhere Härte, eine höhere Zähigkeitsbelastbarkeit und ein entsprechend geringeres Bruchrisiko.

Darüber hinaus wird in der EP 0 208 910 B1 ein faserverstärktes Keramikmaterial für Werkzeuge vorgeschlagen, das folgende Bestandteile enthält:
(A) 50 bis 60 Gew.-% SiC-Fasern;
(B) 0,1 bis 7 Gew.-% wenigstens eines Oxides, ausgewählt aus der aus CaO, MgO, SiO₂, NiO, Y₂O₃ sowie Lanthanoidoxid bestehenden Gruppe; sowie wenigstens eines der Bestandteile (C) und (D), wobei
(C) 0,05 bis 7 Gew.-% wenigstens einer Komponente bedeutet, welche ausgewählt ist aus einer Gruppe, die B, C, AlN, B₄C sowie die Boride des Si, Al, Y und Lanthan umfaßt, und
(D) 0,05 bis 40 Gew.-% eines zu den Gruppen IVa, Va sowie VIa des periodischen Systems der Elemente gehörenden Übergangsmetalles bzw. Oxides, Carbides, Nitrides oder Borides desselben einschließlich fester Lösungen derselben bedeutet, und
(E) Rest Al₂O₃ in einer Menge von nicht weniger als 30 Gew.-%.

Es ist die Aufgabe der vorliegenden Erfindung, den eingangs genannten Keramikverbundkörper hinsichtlich seiner mechanischen Eigenschaften zu verbessern. Hierbei sollen insbesondere die Bruchzähigkeit, die Biegefestigkeit und die Temperaturwechselbeständigkeit verbessert werden.

Es ist ferner Aufgabe der vorliegenden Erfindung zur Erreichung des o.g. Zieles ein geeignetes Verfahren anzugeben und eine neue Verwendung für die erfindungsgemäßen Keramikverbundkörper zu finden.

Diese Aufgabe wird bei dem faserverstärkten Keramikverbundkörper durch die im Anspruch 1 angegebenen Merkmale gelöst. Dieser Körper besitzt gegenüber den nach dem Stand der Technik bekannten Verbundkörpern 0,05 bis 10 Massen-% Nickel und/oder Cobalt und/oder Eisen (bezogen auf die Gesamtmenge).

Vorzugsweise werden mindestens 0,4 bis 3 Massen-% Nickel und/oder Cobalt und/oder Eisen verwendet.

Vergleichbar gute Festigkeitseigenschaften erhält man auch dann noch, wenn bis zu 25 Massen-% des Nickels und/oder Cobalts und/oder Eisens durch Chrom ersetzt werden.

Nach einer Weiterbildung der Erfindung können dem erfindungsgemäßen Keramikverbundkörper außerdem bis zu 2 Massen-% eines oder mehrerer Edelmetalle zugesetzt werden. Unter den Edelmetallen werden die Elemente Silber, Gold, Platin, Iridium, Rhodium, Ruthenium, Palladium und Osmium verstanden, wobei sich im Hinblick auf die besseren Sintereigenschaften insbesondere Platin und/oder Palladium empfehlen.

Nach einer weiteren Ausgestaltung der Erfindung kann der Anteil an SiC-Whiskern in dem erfindungsgemäßen Keramikverbundkörper bis zu 100 Massen-%, vorzugsweise bis zu 80 Massen-%, durch SiC-Plättchen (platelets) ersetzt werden.

Zur Verbesserung der Sinterfähigkeit können die SiC-Whisker und/oder einkristallinen SiC-Plättchen (platelets) bis zu 2/3 ihrer Gesamtmasse durch eingebrachtes SiC-Pulver ersetzt werden.

Eine Verbesserung der Festigkeitseigenschaften ergibt auch die Zugabe von Zirkonium- oder Hafniumoxid bzw. Siliciumnitrid, welche in die Al₂O₃-Matrix eingelagert werden und bis zu 0 bis 20 Massen-% (bezogen auf die Gesamtmasse) ausmachen.

Je nach Verwendungszweck kann insbesondere beim Zerspanen eine Werkstoffverbesserung durch Aufbringen einer oder mehrerer harter Oberflächenschichten erzielt werden. Diese im Prinzip bekannten Oberflächenschichten bestehen aus Oxiden, Carbiden, Nitriden und/oder Carbonitriden eines oder mehrerer der Elemente der IVa bis VIa-Gruppe des Periodensystems und/oder Al₂O₃ und werden nach dem ebenfalls bekannten CVD- bzw. PVD-Verfahren aufgetragen.

Die erfindungsgemäße Herstellung eines Keramikverbundkörpers wird in den Ansprüchen 9 bis 14 beschrieben. Wesentliches neues Merkmal ist hierbei die Durchführung des Sinterns und der heißisostatischen Gasdruckbehandlung (HIP) ohne zwischenzeitige Abkühlung in einer Hitze. Durch dieses kombinierte Sinter/HIP-Verfahren wird eine gleichmäßige Gefügestruktur erreicht.

Bei diesem Verfahren müssen die erfindungsgemäßen Produkte vorzugsweise in einer Inertgasatmosphäre oder unter Vakuum gesintert und anschließend unter einer Inertgasatmospähre, vorzugsweise einer Argon- oder Stickstoffatmosphäre einer Gasdruckbehandlung unterzogen werden. Die Temperatur der Gasdruckbehandlung wird etwa gleich der Sintertemperatur gewählt oder liegt bis zu 100 °C niedriger.

Bei der Mischungsherstellung ist es wichtig, die metallischen Zusätze (Eisen und/oder Nickel und/oder Cobalt) in sehr feinkörniger Form einzubringen und in der Mischung homogen zu verteilen. Hierzu wird die Pulvermischung z.B. in einer Trommelmühle mindestens 48 Stunden unter Zusatz einer Mahlflüssigkeit gemischt und gemahlen. Als Mahlflüssigkeit kann Aceton oder i-Propanol oder vorzugsweise Wasser verwendet werden.

Um eine möglichst günstige Verteilung des Edelmetalles zu erhalten, wird dieses vorzugsweise in Form kolloidaler Partikel mit Kristallitgrößen < 20 nm gleichmäßig mit den übrigen Bestandteilen der Ausgangspulvermischung vermengt.

Nach einer Weiterbildung der Erfindung wird das Edelmetall als kolloidales Hydrosol oder kolloides Lyosol in organischen (Aceton oder i-Propanol) oder wäßrigen Lösungen zugegeben.

Eine erfindungsgemäße Verwendung des Keramikverbundwerkstoffes wird insbesondere bei thermisch stark belasteten Körpern in einer oxidierenden und/oder korrosiven Atmosphäre, wie sie insbesondere in Motoren oder in der Gasturbine vorkommen, liegen oder als Schneidkörper für die spanende Bearbeitung.

Der erfindungsgemäße Keramikverbundkörper mit Eisenzusatz wird vorzugsweise dort angewendet, wo nur eine geringe Korrosionsfestigkeit verlangt wird.

Die verbesserten mechanischen Eigenschaften erfindungsgemäßer Legierungen werden im folgenden anhand von Ausführungsbeispielen erläutert. Es zeigen:
- Fig. 1: die Biegefestigkeit
- Fig. 2: die Verschleißkerbe einer erfindungsgemäßen Legierung
- Fig. 3: das Standzeitverhalten jeweils im Vergleich zu einer nach dem Stand der Technik bekannten Legierung.

In einem ersten Ausführungsbeispiel wurden 88,5 % Al₂O₃, 10,0 % monoklines ZrO₂, 0,5 % Si0₂, 0,5 % MgO, und 0,5 % Ni - Angaben jeweils in Massen-% - in pulverisierter Form gemischt und unter Zusatz von Wasser als einem Mahlmedium 48 Stunden in einer Trommelmühle vermahlen.

Parallel hierzu werden die SiC-Whisker einer 6-stündigen Desagglomeration und Mahlung in Wasser in einer Trommelmühle unterzogen. Nach der Desagglomeration werden die Whisker durch Absiebung zur Entfernung der Grobanteile klassiert. Das Sediment kann nach ca. 10 Stunden Ruhezeit weiterverarbeitet werden.

Durch den beschriebenen kombinierten Sieb-/Sedimentationsvorgang werden restliche Agglomerate und überlange Whisker sowie der Feinanteil entfernt. Verwendet wird eine Fraktion, die überwiegend aus Whiskern mit einem Länge/Durchmesser-Verhältnis von ca. 5 bis 15 besteht. Die ausgewählte Whiskerfraktion wird mit dem zuerst beschriebenen Matrixanteil im Verhältnis 88 : 17 (Matrix : Whisker) miteinander in wässriger Suspension vermischt und 2 Stunden in einer Trommelmühle homogenisiert. Hiernach erfolgt die Trocknung an Luft bei ca. 100 °C sowie eine anschließende Absiebung des Trockenkuchens zur Bereitstellung einer fertigen Pulvermischung, die in Graphitformen zu großen Platten mit einem Durchmesser von z.B. 150 bis 300 mm bei Temperaturen von 1300 °C bis 1800 °C heißgepreßt wird. Aus diesen Platten können durch Trennen und Schleifen verschiedene Wendeschneidplatten herausgearbeitet werden.

Anstelle des hier verwendeten Heißpressens kann alternativ auch die in den Ansprüchen 9 ff. beschriebene kombinierte Sinter/HIP-Herstellung bei Whiskergehalten bis 20 Massen-%, vorzugsweise 15 Massen-% gewählt werden.

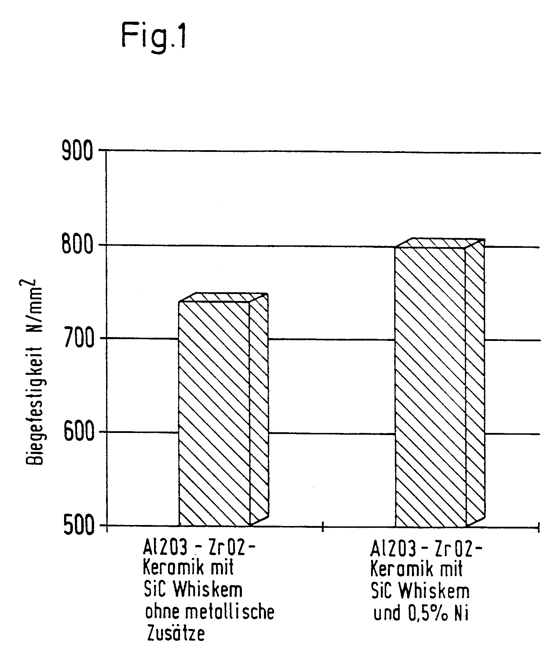

Fig. 1 zeigt die Biegefestigkeit einer mit SiC-Whiskern verstärkten Al₂O₃-ZrO₂-Keramik mit Nickelzusatz im Vergleich zu einer entsprechenden Keramik ohne Metallanteile. Durch Zusatz von 0,5 Massen-% Nickel konnte die Biegefestigkeit von 740 N/mm² auf 800 N/mm² erhöht werden.

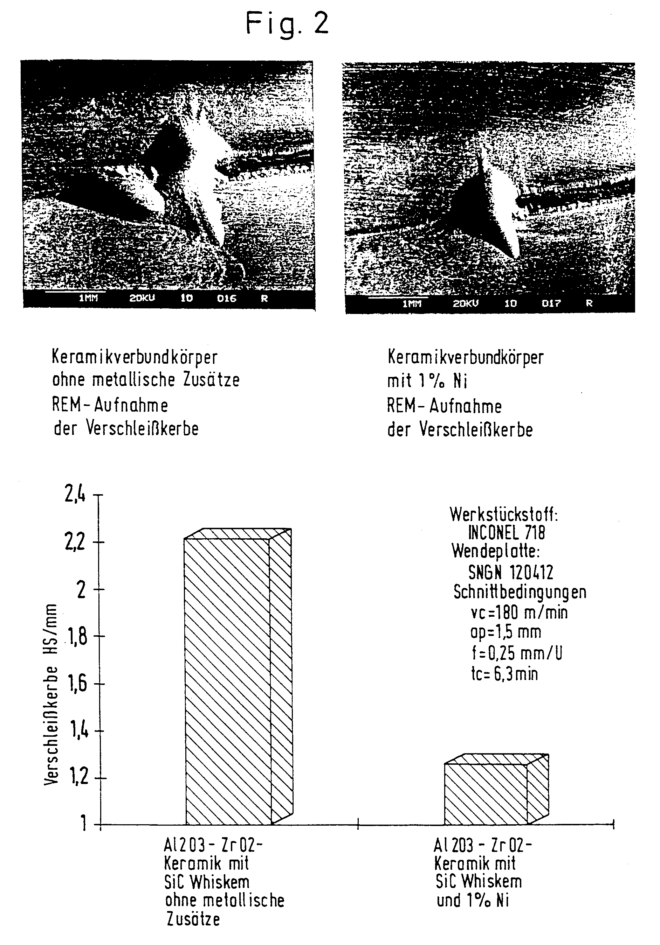

Fig. 2 zeigt den Einfluß des Nickelzusatzes auf das Verschleißverhalten SiC- whiskerverstärkter Al₂O₃-ZrO₂-Keramik. Bei einer Schnittgeschwindigkeit V_{c} = 180 m/min, einer Schnittiefe aₚ = 1,5 mm, einem Vorschub f = 0,25 mm und einer Schnittzeit t_{c} = 6,3 min wurde die Tiefe der Verschleißkerbe, gemessen auf der Freifläche, bei Verwendung einer whiskerverstärkten Al₂O₃-ZrO₂-Keramik mit 1 % Nickelzusatz im Vergleich zu einer nickelfreien whiskerverstärkten Keramik entsprechender Zusammensetzung von 2,2 mm auf 1,3 mm gesenkt.

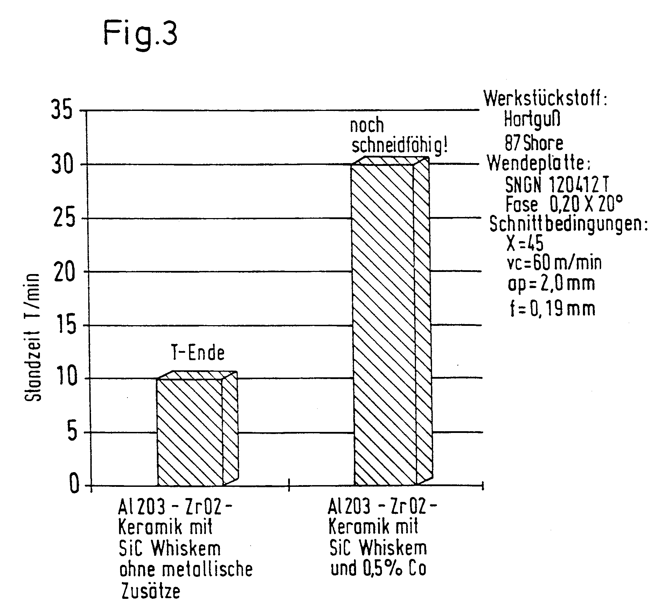

In Fig. 3 wurde eine Aluminiumoxid-Zirkoniumdioxid-Keramik mit SiC-Whiskern ohne metallische Zusätze, also ohne Nickel oder Cobalt oder Eisen mit einer entsprechenden Keramik mit 0,5 % feinkörnigem Cobalt verglichen. Wie aus Fig. 3 hervorgeht, konnte durch den 0,5 %igen Cobaltzusatz die Standzeit um mehr als das 3-fache erhöht werden. Die Schnittbedingungen sind Fig. 3 zu entnehmen.

Die jeweils herangezogene Vergleichskeramik mit SiC-Whiskern besaß keine Metallanteile (Ni, Co, Fe), wodurch sich in entsprechender Weise der Aluminiumoxidanteil erhöhte.

## Patentansprüche

1. Faserverstärkter Keramikverbundkörper, der folgende Bestandteile enthält
- 5 bis 40 Massen-% SiC-Whisker
- 0,05 bis 3 Massen-% Y₂O₃, SiO₂, MgO, NiO und/oder AlN und/oder
- Carbide, Nitride und/oder Carbonitride der Metalle der IVa-, Va- oder VIa-Gruppe des Periodensystems und/oder Oxide der Metalle der IVa-Gruppe des Periodensystems bis zu 40 Massen-%,
- 0,05 bis 10 Massen-% Nickel und/oder Cobalt und/oder Eisen und
- Rest Al₂O₃ in einer Mindestmenge von 30 Massen-%.

2. Keramikverbundkörper nach Anspruch 1, dadurch gekennzeichnet, daß 0,4 bis 3 Massen-% Nickel und/oder Cobalt und/oder Eisen enthalten sind.

3. Keramikverbundkörper nach einem der Ansprüche 1 bis 2, dadurch gekennzeichnet, daß bis zu 25 Massen-% des Nickels und/oder Cobalts und/oder Eisens durch Chrom ersetzt sind.

4. Keramikverbundkörper nach einem der Ansprüche 1 bis 3, dadurch gekennzeichnet, daß bis zu 2 Massen-%, vorzugsweise bis zu 1 Massen-% - bezogen auf die Gesamtmasse - eines oder mehrerer Edelmetalle (Silber, Gold, Platin, Iridium, Rhodium, Ruthenium, Palladium und Osmium), insbesondere Platin und/oder Palladium, enthalten sind.

5. Keramikverbundkörper nach einem der Ansprüche 1 bis 4, dadurch gekennzeichnet, daß der Anteil an SiC-Whiskern bis zu 100 Massen-%, vorzugsweise bis zu 80 Massen-%, durch SiC-Plättchen (platelets) ersetzt ist.

6. Keramikverbundkörper nach einem der Ansprüche 1 bis 5, dadurch gekennzeichnet, daß die SiC-Whisker und/oder die einkristallinen SiC-Plättchen bis zu 2/3 ihrer Gesamtmasse durch eingebrachtes SiC-Pulver ersetzt sind.

7. Keramikverbundkörper nach einem der Ansprüche 1 bis 6, dadurch gekennzeichnet, daß 0 bis 20 Massen-% ZrO₂, HfO₂ und/oder Si₃N₄ enthalten sind.

8. Keramikverbundkörper nach einem der Ansprüche 1 bis 7, dadurch gekennzeichnet, daß eine oder mehrere Oberflächenschichten, bestehend aus Oxiden, Carbiden, Nitriden und/oder Carbonitriden eines oder mehrerer der Elemente der IVa- bis VIa-Gruppe des Periodensystems und/oder Al₂O₃ aufgebracht sind.

9. Verfahren zur Herstellung eines Keramikverbundkörpers nach einem der Ansprüche 1 bis 8, bei dem die Ausgangspulvermischung vermischt, nach vermahlen, getrocknet, ggf. granuliert, uniaxial oder kaltisostatisch gepreßt und der so hergestellte Verbundkörper bei 1450°C bis 1800°C gesintert und anschließend unter einem Druck von 5 bis ca. 2000 bar heißisostatisch nachverdichtet (HIP) wird, dadurch gekennzeichnet, daß das Sintern und das HIP ohne zwischenzeitige Abkühlung in einer Hitze durchgeführt wird.

10. Verfahren nach Anspruch 9, dadurch gekennzeichnet, daß der Sinterprozeß der kombinierten Sinter/HIP-Behandlung in einer Inertgasatmosphäre oder unter Vakuum durchgeführt wird.

11. Verfahren nach den Ansprüchen 9 und 10, dadurch gekennzeichnet, daß die Gasdruckbehandlung der kombinierten Sinter/HIP-Behandlung in einer Inertgastmoshäre vorzugsweise in einer Argon- oder Stickstoffatmosphäre durchgeführt wird.

12. Verfahren nach den Ansprüchen 9 bis 11, dadurch gekennzeichnet, daß die HIP-Temperatur bis zu 100 °C unter der Sintertemperatur liegt.

13. Verfahren nach einem der Ansprüche 9 bis 12, dadurch gekennzeichnet, daß das Edelmetall in Form kolloidaler Partikel mit Kristallitgrößen < 20 nm gleichmaßig mit den übrigen Bestandteilen der Ausgangspulvermischung vermengt wird.

14. Verfahren nach Anspruch 13, dadurch gekennzeichnet, daß das Edelmetall als kolloidales Hydrosol oder kolloides Lyosol in organischen (Aceton, i-Propanol) oder wäßrigen Lösungen zugegeben wird.

15. Verwendung des Keramikverbundwerkstoffes nach einem der Ansprüche 1 bis 8 als Werkstoff für thermisch stark belastete Körper, insbesondere im Automobilbau, im Gasturbinenbau oder als Schneidkörper für die spanende Bearbeitung.

## Claims

1. Fiber-reinforced ceramic composite body containing the following components
5 to 40 % by mass SiC whiskers
0.05 to 3 % by mass Y₂O₃, SiO₃, MgO, NiO and/or AlN and/or
carbides, nitrides and/or carbonitrides of the metals of Group IVa, Va, VIa of the periodic table of elements and/or oxides of the metals of Group IVa of the periodic table of elements up to 40 % by mass,
0.05 to 10 % by mass of nickel and/or cobalt and/or iron and
the balance being Al₂O₃ in a minimal amount of 30 % by mass.

2. Ceramic composite body according to claim 1, characterized in that it contains 0.4 - 3 % by mass nickel and/or cobalt and/or iron.

3. Ceramic composite body according to one of the claims 1 to 2, characterized in that up to 25 % by mass of the nickel and/or cobalt and/or iron are replaced by chromium.

4. Ceramic composite body according to one of the claims 1 to 3, characterized in that, it contains up to 2 % by mass, preferably up to 1 % by mass - considered with respect to the total mass - of one or more precious metals (gold, silver, platinum, iridium, rhodium, rhutenium, palladium and osmium), particularly platinum and/or palladium.

5. Ceramic composite body according to one of the claims 1 to 4, characterized in that the fraction of SiC whiskers is replaced completely or partially, preferably up to 80 % by mass by Si lamellae (platelets).

6. Ceramic composite body according to one of the claims 1 to 5, characterized in that the SiC Whiskers and/or the monocrystalline SiC platelets are replaced up to 2/3 of their total mass by the introduction of SiC powder.

7. Ceramic composite body according to one of the claims 1 to 6, characterized in that it contains 0 to 20 % by mass of ZrO₂, HfO₂ and/or Si₃N₄.

8. Ceramic composite body according to one of the claims 1 to 7, characterized in that one or more surface coatings are applied, consisting of oxides, carbides, nitrides and/or carbonitrides of one or more elements of Groups IVa to VIa of the periodic table of elements and/or Al₂O₃.

9. Process for the production of a ceramic composite body according to one of the claims 1 to 8, wherein the initial powder is mixed, subjected to wet grinding, dried, optionally granulated, subjected to uniaxial or hot isostatic pressing and that the so-produced composite body is sintered at 1450 to 1800 ° C and subsequently subjected to hot isostatic densification (HIP) at a pressure of 5 to approximately 2000 bar, characterized in that sintering and the HIP processes are performed without intermediate cooling at one temperature.

10. Process according to claim 9, characterized in that the sintering process of the combined sinter/HIP treatment is performed in an atmosphere of inert gas or under vacuum.

11. Process according to claims 9 and 10, characterized in that the gas pressure treatment of the combined sinter/HIP treatment is performed in an atmosphere of inert gas, preferably an argon or nitrogen atmosphere.

12. Process according to claims 9 to 11, characterized in that the HIP temperature lies below the sintering temperature by approximately 100 C.

13. Process according to one of the claims 9 to 12, characterized in that the precious metals are uniformly mixed with the other components of the initial powder mixture in the form of colloidal particles with a crystalline grain size < 20 nm.

14. Process according to claim 13, characterized in that the precious metal is added as colloidal hydrosol or colloidal lyosol in organic solutions (acetone, i-propanol) or in aqueous solutions.

15. Use of the ceramic composite body according to one of the claims 1 to 8 as material for bodies subjected to heavy thermal load, particularly in automobile construction, in gas turbine construction or as a cutting body for the machining process.

## Revendications

1. Corps céramique composite renforcé par fibres et qui contient les composants suivants :
- 5 à 40 % de masse de barbes de SiC,
- 0,05 à 3 % de masse de Y₂O₃, SiO₂, MgO, NiO et/ou d'AlN et/ou
- des carbures, des nitrures et/ou des carbonitrures des métaux du groupe IVa, Va ou VIa de la classification périodique des éléments et/ou des oxydes des métaux du groupe IVa de la classification périodique des éléments jusqu'à 40 % de masse,
- 0,05 à 10 % de masse de nickel et/ou de cobalt et/ou de fer et
- un résidu d'Al₂O₃ dans une quantité minimale de 30 % de masse.

2. Corps céramique composite selon la revendication 1, caractérisé en ce qu'il contient 0,4 à 3 % de masse de nickel et/ou de cobalt et/ou de fer.

3. Corps céramique composite selon l'une des revendications 1 à 2, caractérisé en ce que 25 % maximum de masse du nickel et/ou du cobalt et/ou du fer sont remplacés par du chrome.

4. Corps céramique composite selon l'une des revendications 1 à 3, caractérisé en ce qu'il contient 2 % maximum de masse, et, de façon privilégiée, 1 % maximum de masse, par rapport à la masse totale, d'un ou de plusieurs métaux nobles (argent, or, platine, iridium, rhodium, ruthénium, palladium et osmium), en particulier de platine et/ou de palladium.

5. Corps céramique composite selon l'une des revendications 1 à 4, caractérisé en ce que le pourcentage de barbes de SiC, de 100 % maximum de masse et, de façon privilégiée, de 80 % maximum de masse, est remplacé par des plaquettes de SiC (platelets).

6. Corps céramique composite selon l'une des revendications 1 à 5, caractérisé en ce que les barbes de SiC et/ou les plaquettes de SiC monocristallines sont remplacées, jusqu'à 2/3 de leur masse totale, par l'introduction de poudre de SiC.

7. Corps céramique composite selon l'une des revendications 1 à 6, caractérisé en ce qu'il contient de 0 à 20 % de masse de ZrO₂_{,} de HfO₂ et/ou de Si₃N₄.

8. Corps céramique composite selon l'une des revendications 1 à 7, caractérisé par l'introduction d'une ou de plusieurs couches superficielles composées d'oxydes, de carbures, de nitrures et/ou de carbonitrures de l'un ou de plusieurs des éléments du groupe IVa à VIa de la classification périodique et/ou d'Al₂O₃.

9. Procédé de production d'un corps céramique composite selon l'une des revendications 1 à 8, pour lequel le mélange initial de poudre est mélangé après avoir été moulu, séché, le cas échéant granulé, comprimé de façon uniaxiale ou isostatique à froid et le corps composite produit est fritté de 1450 à 1800° C puis recompressé de façon isostatique à température élevée (HIP), sous une pression de 5 à environ 2000 bar, caractérisé en ce que le frittage et le HIP sont réalisés à température élevée, sans refroidissement dans l'intervalle.

10. Procédé selon la revendication 9, caractérisé en ce que le cycle de frittage du traitement combiné par frittage et HIP est effectué dans une atmosphère inerte ou sous vide.

11. Procédé selon les revendications 9 et 10, caractérisé en ce que le traitement sous pression de gaz, par combinaison du frittage et du HIP, est effectué dans une atmosphère inerte et, de façon privilégiée, dans une atmosphère d'argon ou d'azote.

12. Procédé selon les revendications 9 à 11, caractérisé en ce que la température de la HIP est inférieure de 100° C maximum à la température du frittage.

13. Procédé selon l'une des revendications 9 à 12, caractérisé en ce que le métal noble, sous forme de particules colloïdales avec des grosseurs de cristallite inférieures à 20 nm, est mélangé régulièrement au reste des composants du mélange initial de poudre.

14. Procédé selon la revendication 13, caractérisé en ce que le métal noble est ajouté, en tant qu'hydrosol colloïdal ou lyosol colloïdal, à des solutions organiques (acétone, propanol i) ou aqueuses.

15. Utilisation de la matière céramique composite, selon l'une des revendications 1 à 8, en tant que matière pour des corps soumis à de fortes contraintes thermiques, en particulier dans la construction automobile, dans la construction de turbines à gaz ou en tant que corps de coupe pour l'usinage.
